# FASCICULE DE BREVET EUROPEEN

(11) **EP 2 488 380 B1**
(45) Date de publication et mention de la délivrance du brevet: **05.12.2018**
(21) Numéro de dépôt: 10781974.0
(22) Date de dépôt: 11.10.2010
(51) Int. Cl.: B60W 10/02, B60W 30/18, F16H 61/421, F16H 61/431, B60K 6/12, F16H 61/4096

(54) **CHAINE DE TRACTION POUR VEHICULE HYBRIDE**
ANTRIEBSSYSTEM FÜR EIN HYBRIDFAHRZEUG
POWER TRAIN FOR A HYBRID VEHICLE

(30) Priorité: 15.10.2009 FR 0957216
(43) Date de publication de la demande: 22.08.2012
(73) Titulaire: Technoboost, 75116 Paris (FR)
(72) Inventeur: GAUTHIER, Pierre, F-92370 Chaville (FR)
(74) Mandataire: Ménès, Catherine
(86) Numéro de dépôt international: PCT/FR2010/052150
(87) Numéro de publication internationale: WO 2011/045519

(56) Documents cités:
- WO-A1-98/47732
- WO-A2-99/21263
- DE-A1-102006 036 846
- DE-A1-102008 026 515
- FR-A1- 2 613 016
- GB-A- 2 002 862
- US-A1- 2005 164 827
- US-A1- 2009 095 549
- US-A1- 2009 127 011
- US-B1- 7 597 172

## Description

La présente invention concerne une chaîne de traction pour un véhicule hybride utilisant l'énergie hydraulique comme moyen de stockage d'énergie, ainsi qu'un véhicule hybride équipé d'une telle chaîne de traction.

Un type de véhicule hybride connu utilise un moteur thermique formant une motorisation principale, et une machine hydraulique reliée au moteur thermique, pouvant constituer un moteur ou une pompe pour charger des accumulateurs de pression hydrauliques, ou pour délivrer une puissance mécanique aux roues motrices du véhicule en prélevant de l'énergie dans ces accumulateurs.

On peut de cette manière pendant les phases de freinage, utiliser la machine hydraulique comme une pompe pour recharger les accumulateurs de pression, en récupérant l'énergie cinétique du véhicule. On peut aussi pendant les phases d'accélération, utiliser la machine hydraulique comme un moteur prélevant le fluide sous pression dans l'accumulateur, pour fournir une puissance mécanique qui s'ajoute à celle délivrée par le moteur thermique.

Cette utilisation de moyens de stockage d'énergie permet d'optimiser le fonctionnement du moteur thermique, et de réduire sa consommation ainsi que les émissions polluantes.

Le document US-A-2005 164827 divulgue une chaîne de traction selon le préambule de la revendication 1.

Un perfectionnement connu de ces véhicules hybrides, présenté notamment dans le document US-A1-20090036248, comporte une première machine hydraulique reliée au moteur thermique, et une deuxième machine hydraulique reliée à un élément d'un train planétaire, les deux autres éléments de ce train planétaire étant reliés l'un aux roues motrices du véhicule, et l'autre à ce moteur thermique.

On peut avec cette disposition utiliser les deux machines hydrauliques suivant un mode de fonctionnement du type parallèle, les machines hydrauliques et le moteur thermique pouvant entraîner simultanément les roues motrices par une transmission de puissance mécanique.

Toutefois les deux machines hydrauliques gardant en permanence une liaison mécanique entre elles, on ne peut pas réaliser avec cette disposition un mode de fonctionnement du type série, qui permet d'une part au moteur thermique de recharger les accumulateurs de pression avec une première machine hydraulique, et d'autre part d'utiliser de manière indépendante cette énergie stockée pour la traction du véhicule par la deuxième machine hydraulique, avec des vitesses de rotation propres à chaque machine qui puissent être réglées indépendamment pour optimiser les points de fonctionnement.

La présente invention a notamment pour but d'éviter ces inconvénients de la technique antérieure, et d'apporter une solution simple et efficace à la réalisation d'une chaîne de traction d'un véhicule hybride, permettant une utilisation de deux machines hydrauliques suivant les modes de fonctionnement série ou parallèle.

Elle propose à cet effet une chaîne de traction pour véhicule hybride selon la revendication 1.

Un avantage de cette chaîne de traction est que l'on peut obtenir un premier mode de fonctionnement du type parallèle en engageant le moyen de liaison, pour disposer d'un entraînement direct des roues motrices par le moteur thermique, avec l'assistance en parallèle des machines hydrauliques, et un deuxième mode de fonctionnement du type série en désengageant le moyen de liaison, permettant de faire travailler de manière indépendante les deux machines hydrauliques.

D'autres caractéristiques de la chaîne de traction selon l'invention sont énoncées dans les revendications 2 à 6.

L'invention comprend aussi un procédé de fonctionnement pour une chaîne de traction comportant l'une quelconque des caractéristiques précédentes, ce procédé en mode de fonctionnement série, désengageant le moyen de liaison, et pilotant par une unité de contrôle les cylindrés variables de la première machine hydraulique utilisée en pompe, et de la deuxième machine hydraulique utilisée en moteur.

Le procédé de fonctionnement d'une chaîne de traction peut de plus en mode de fonctionnement parallèle, engager le moyen de liaison, et piloter par une unité de contrôle les cylindrés variables des machines hydrauliques.

Dans ce mode de fonctionnement en parallèle, le procédé de fonctionnement peut utiliser simultanément les deux machines hydrauliques pour délivrer soit un couple de traction important, soit un effort de freinage important sur les roues motrices.

L'invention a aussi pour objet un véhicule hybride disposant d'une chaîne de traction comportant deux machines hydrauliques comprenant des cylindrées variables, connectées toutes les deux à un accumulateur hydraulique de stockage d'énergie, cette chaîne de traction comportant de plus l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma présentant une chaîne de traction comprenant un circuit hydraulique, d'un véhicule hybride selon l'invention ;
- la figure 2 est le schéma de la chaîne de traction suivant le mode de fonctionnement série, présentant partiellement le circuit hydraulique, et disposé pour délivrer un couple sur les roues motrices ;
- la figure 3 est le schéma de la chaîne de traction suivant le mode de fonctionnement série, disposé pour récupérer de l'énergie, ou pour démarrer le moteur thermique ;
- la figure 4 est le schéma de la chaîne de traction suivant le mode de fonctionnement parallèle, disposé pour délivrer un couple sur les roues motrices, et pour recharger les accumulateurs de pression ;
- la figure 5 est le schéma de la chaîne de traction suivant le mode de fonctionnement parallèle, disposé pour délivrer un couple sur les roues motrices à partir du moteur thermique et de l'accumulateur de pression ; et
- la figure 6 est le schéma de la chaîne de traction suivant le mode de fonctionnement parallèle, disposé pour récupérer de l'énergie.

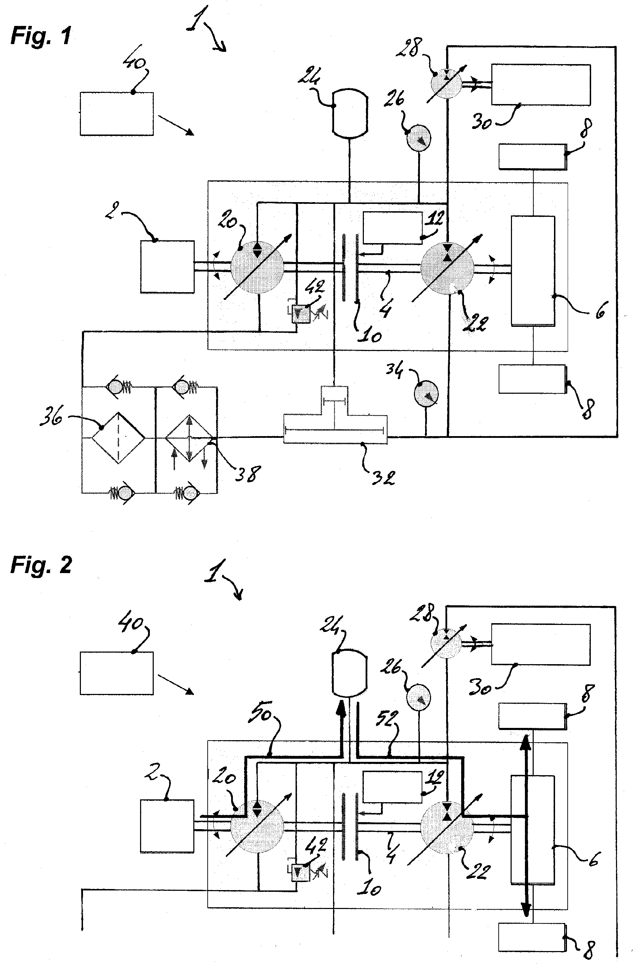

La figure 1 présente schématiquement une chaîne de traction 1 d'un véhicule automobile, comprenant un moteur thermique 2 entraînant par un arbre moteur 4, une transmission mécanique 6 comportant un différentiel de répartition du mouvement vers les deux roues motrices 8 d'un essieu. Les roues motrices 8 peuvent être les roues avant ou arrière du véhicule.

L'arbre moteur 4 comporte un moyen de liaison 10 pouvant être engagé ou désengagé par un actionneur piloté 12 commandé par une unité de contrôle 40, qui peut séparer cet arbre en une partie amont reliée de manière permanente au moteur thermique 2, et une partie aval reliée aussi de manière permanente aux roues motrices 8.

Le moyen de liaison 10 peut comprendre un dispositif d'engagement comme un crabot ou un embrayage, actionné par l'actionneur piloté 12.

La partie amont de l'arbre 4 entraîne de manière permanente une première machine hydraulique 20, et la partie aval entraîne aussi de manière permanente une deuxième machine hydraulique 22. Les deux machines hydrauliques 20, 22 comportent une cylindrée variable pilotée par l'unité de contrôle 40, et peuvent travailler en moteur ou en pompe.

Les machines hydrauliques 20, 22 sont connectées ensemble à un circuit haute pression comprenant un accumulateur de pression 24 qui maintient une pression permanente grâce à une membrane contenant un gaz sous pression. Le circuit haute pression comprend aussi un capteur de haute pression 26 qui enregistre la pression de charge de l'accumulateur de pression 24.

Le circuit haute pression est connecté par ailleurs à un moteur hydraulique 28 comprenant une cylindrée variable pilotée par l'unité de contrôle 40, qui entraîne suivant une vitesse et un couple donné pour optimiser la consommation d'énergie, des accessoires 30. Ces accessoires 30 peuvent comporter notamment un alternateur, ou un compresseur de climatisation.

Les machines hydrauliques 20, 22 ainsi que le moteur hydraulique 28 des accessoires, sont connectés par ailleurs à un circuit basse pression comprenant un réservoir hydraulique 32 pressurisé par la haute pression. Le réservoir hydraulique pressurisé 32 permet de maintenir une basse pression minimum permettant d'éviter des problèmes de cavitation à l'aspiration des machines hydrauliques 20, 22, quand elles sont utilisées en pompe.

Le circuit basse pression comporte de plus un capteur de basse pression 34, permettant en effectuant la différence de mesure avec le capteur de haute pression 26, de déterminer par l'unité de contrôle 40 la quantité d'énergie disponible dans l'accumulateur de pression 24, ainsi que le couple appliqué sur l'arbre de chaque machine hydraulique 20, 22.

Le circuit basse pression comporte aussi un filtre 36 pour garantir un niveau de pureté du fluide hydraulique, et un échangeur thermique 38 afin de refroidir ce liquide hydraulique.

Une soupape de limitation de pression 42 est interposée entre les circuits haute et basse pression, pour limiter la différence de pression maximum entre ces deux circuits.

La figure 2 présente le mode de fonctionnement série, utilisé généralement pour des petites puissances de l'ordre de quelques kilowatts. Le moyen de liaison 10 est désengagé par l'actionneur piloté 12, pour séparer les deux parties de l'arbre moteur 4.

Le moteur thermique 2 délivre une puissance à la première machine hydraulique 20 utilisée en pompe, pour charger l'accumulateur de pression 24 comme indiqué par la flèche 50. En même temps, l'accumulateur de pression 24 délivre un débit de fluide sous pression indiqué par la flèche 52, pour alimenter la deuxième machine hydraulique 22 utilisée en moteur, qui entraîne par la transmission 6 les roues motrices 8 du véhicule.

L'unité de contrôle 40 gère en permanence la cylindrée de la première machine hydraulique 20, ainsi que les caractéristiques de fonctionnement du moteur thermique 2 par l'intermédiaire de son contrôle moteur, pour optimiser le point de fonctionnement de ce moteur afin d'obtenir le meilleur rendement. En particulier le moteur thermique 2 est utilisé par intermittence pour délivrer une forte puissance avec un bon rendement, qui est stockée dans l'accumulateur de pression 24 pour être ensuite utilisée de manière progressive.

Le capteur de haute pression 26 indique une pression maximum de l'accumulateur de pression 24 pour arrêter le moteur thermique 2 et la charge de cet accumulateur, ou une pression minimum pour redémarrer ce moteur et recharger l'accumulateur.

De même l'unité de contrôle gère la cylindrée de la deuxième machine hydraulique 22, en fonction du couple demandé sur les roues motrices 8, et de la différence de pression entre les circuits haute et basse pression qui génère ce couple.

Le moteur thermique 2 étant arrêté, on peut continuer à rouler suivant un mode hydraulique pur grâce au débit fourni par l'accumulateur de pression 24 qui est indiqué par la flèche 52, sans émission de gaz polluant.

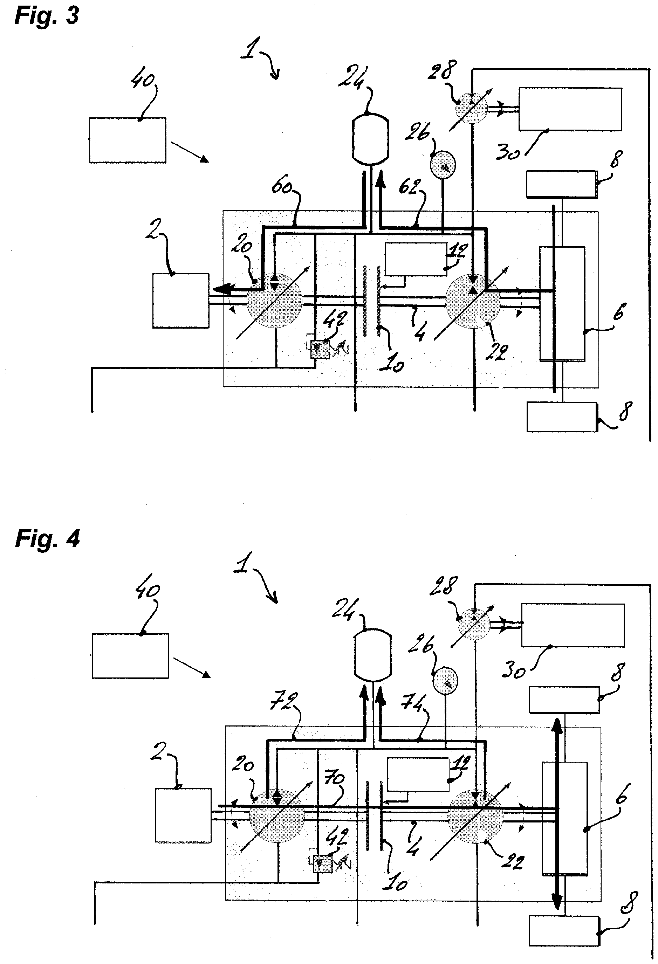

La figure 3 est le schéma de la chaîne de traction suivant le mode de fonctionnement série, disposé pour récupérer de l'énergie, ou pour démarrer le moteur thermique 2.

Lors d'une demande de ralentissement du véhicule, ou dans les descentes, on peut récupérer l'énergie cinétique de ce véhicule en ajustant la cylindrée variable de la deuxième machine hydraulique 22 utilisée en pompe, qui est entraînée par les roues motrices 8 pour recharger l'accumulateur de pression 24 comme indiqué par la flèche 62.

La cylindrée variable est ajustée en fonction de la différence de pression entre la haute et la basse pression. On applique ainsi un couple de freinage sur les roues motrices 8, dont la puissance est modulée par le réglage de cette cylindrée variable.

On peut aussi indépendamment comme indiqué par la flèche 60, prélever de l'énergie de l'accumulateur de pression 24 pour entraîner la première machine hydraulique 20 utilisée en moteur, et démarrer le moteur thermique 2 à la mise en route du véhicule, ou de manière automatique après des arrêts suivant un fonctionnement de ce moteur du type « Start-Stop ».

La cylindrée variable de la première machine hydraulique 20 est de même ajustée en fonction de la différence de pression disponible entre la haute et la basse pression, pour obtenir le couple d'entraînement nécessaire.

La figure 4 présente le mode de fonctionnement parallèle, utilisé généralement pour des puissances plus importantes, supérieures à quelques kilowatts. Le moyen de liaison 10 est engagé par l'actionneur piloté 12, pour relier les deux parties de l'arbre moteur 4.

Le moteur thermique 2 délivre une puissance directement aux roues motrices 8 par l'arbre moteur 4, comme indiqué par la flèche 70, cette liaison mécanique directe utilisée pour une puissance élevée comportant un bon rendement. La transmission 6 peut comprendre de plus différents rapports de vitesse, pour réaliser une adaptation de la vitesse du moteur thermique 2 et améliorer le rendement.

En parallèle de l'entraînement direct des roues motrices 8 par l'arbre moteur 4, le moteur thermique 2 peut recharger l'accumulateur de pression 24 par la première machine hydraulique 20 utilisée en pompe comme indiqué par la flèche 72, et si nécessaire aussi par la deuxième machine hydraulique 22 utilisée en pompe comme indiqué par la flèche 74.

L'unité de contrôle 40 ajuste les cylindrées variables des pompes 20, 22, pour obtenir la puissance de ces pompes demandée. L'unité de contrôle 40 pilote aussi le niveau de couple du moteur thermique 2, pour lui permettre de délivrer la puissance totale nécessaire pour les pompes 20, 22, ainsi que pour la transmission 6 et les roues motrices 8.

Quand l'accumulateur de pression 24 est complètement chargé, on amène progressivement les cylindrés variables des pompes 20, 22 suivant un volume nul pour ne plus débiter de fluide, et on diminue parallèlement la demande de couple du moteur thermique 2 pour ne pas perturber l'agrément de conduite du véhicule.

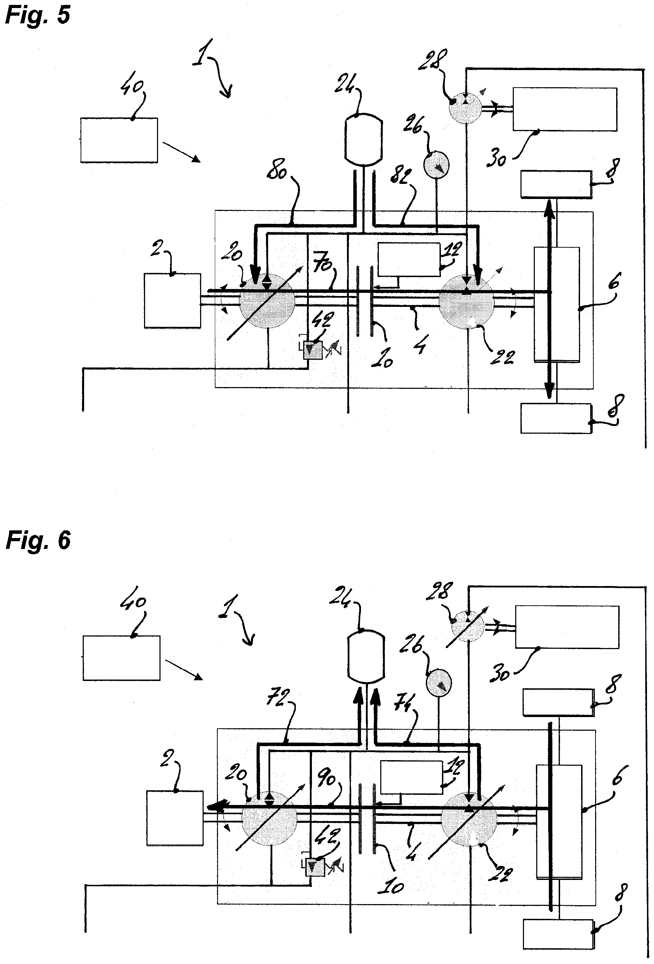

La figure 5 présente une variante pour le mode de fonctionnement parallèle, où l'arbre moteur 4 reçoit en plus de la puissance délivrée par le moteur thermique 2, une puissance complémentaire délivrée par l'une ou les deux machines hydrauliques 20, 22, qui travaillent en moteur. L'énergie est prélevée sur l'accumulateur de pression 24 comme indiqué par les flèches 80, 82, les cylindrées variables des moteurs 20, 22 étant ajustées suivant la différence entre la haute et la basse pression, et le niveau de puissance que l'on veut obtenir.

Ce fonctionnement permet d'obtenir une puissance de traction élevée sur les roues motrices 8, le moteur thermique 2 ainsi que les deux machines hydrauliques 20, 22 ajoutant leur puissance pour donner l'accélération la plus forte du véhicule. Ce fonctionnement intervient notamment quand une énergie est disponible dans l'accumulateur de pression 24, et que la demande de couple est plus élevée que ce que peut fournir le moteur thermique 2 seul.

La figure 6 présente une variante pour le mode de fonctionnement parallèle, où le conducteur demande un freinage du véhicule.

Une des deux machines hydrauliques 20, 22 utilisée en pompe, ou les deux en cas de forte demande de freinage, ont leurs cylindrées variables ajustées pour en fonction de la différence entre la haute et la basse pression, obtenir un couple sur l'arbre moteur 4 qui freine les roues motrices 8 suivant la demande.

Dans ce cas le moteur thermique 2 est aussi entraîné, et délivre un couple de freinage qui s'ajoute à celui des machines hydrauliques 20, 22.

Quand la pression de l'accumulateur de pression 24 monte et pour une demande de freinage constante, la cylindrée des machines hydrauliques 20, 22 est progressivement diminuée en proportion pour maintenir le couple de freinage. En fin de charge de l'accumulateur de pression 24, l'unité de contrôle passe les cylindrés progressivement à un volume nul, et active les freins de roue du véhicule qui prennent le relai automatiquement de manière progressive pour maintenir le confort et la sécurité.

En fin de charge de l'accumulateur de pression 24, en cas de surcharge accidentelle de cet accumulateur, la soupape de limitation 42 dérive le flux du circuit haute pression vers le circuit basse pression.

D'une manière générale l'unité de contrôle 40 adapte en permanence les cylindrées variables des machines hydrauliques 20, 22, pour ajuster de manière continue en fonction de la différence entre la haute et la basse pression, le niveau de couple souhaité sur l'arbre de ces machines travaillant en moteur ou en pompe. Ces adaptations sont toujours coordonnées avec les actions sur le contrôle du moteur thermique 2 pour définir le couple à délivrer par ce moteur, ou sur les freins de roue pour définir leurs niveaux de freinage, de manière à obtenir un agrément de conduite et une réduction des émissions polluantes.

L'unité de contrôle 40 peut être une unité propre reliée à celle du moteur thermique 2, ou peut être intégrée dans celle de ce moteur thermique. Le moteur thermique est conçu pour être utilisé avec une plage de fonctionnement réduite, sans exigence de dynamique particulière. Il peut être simplifié et optimisé pour cette plage, et son coût peut être réduit.

Le freinage du véhicule est en partie assuré par les machines hydrauliques, les moyens de freinage des roues dissipent moins d'énergie et comportent une capacité d'usure réduite, ils peuvent aussi être simplifiés.

## Revendications

1. Chaîne de traction pour véhicule hybride, comportant deux machines hydrauliques (20, 22) comprenant des cylindrées variables, connectées toutes les deux à un accumulateur de pression hydraulique (24) qui stocke une énergie, une première machine hydraulique (20) étant reliée de manière permanente à un moteur thermique (2) de traction, et une deuxième machine hydraulique (22) étant reliée aussi de manière permanente à des roues motrices (8) du véhicule, **caractérisée en ce qu'**elle comporte en outre un arbre moteur (4) qui comporte un moyen de liaison (10) qui peut être engagé ou désengagé et qui peut séparer ledit arbre (4) en une partie amont reliée de manière permanente au moteur thermique (2) et une partie aval reliée aussi de manière permanente aux roues motrices (8), la partie amont de l'arbre (4) entraînant de manière permanente la première machine hydraulique (20) et la partie aval entraînant aussi de manière permanente la deuxième machine hydraulique (22).

2. Chaîne de traction selon la revendication 1, **caractérisée en ce que** les parties amont et aval de l'arbre (4) peuvent être engagées par le moyen de liaison (10).

3. Chaîne de traction selon la revendication 1 ou 2, **caractérisée en ce que** le moyen de liaison (10) comprend un dispositif d'engagement comme un crabot ou un embrayage, actionné par un actionneur piloté (12) commandé par une unité de contrôle (40).

4. Chaîne de traction selon la revendication 3, **caractérisée en ce que** l'unité de contrôle (40) pilote les cylindrés variables des machines hydrauliques (20, 22), ainsi que le moteur thermique (2).

5. Chaîne de traction selon la revendication 4, **caractérisée en ce que** l'unité de contrôle (40) ajuste la cylindrée de chaque machine hydraulique (20, 22) utilisé en moteur ou en pompe, en fonction du couple souhaité sur son arbre, et de la différence de pression entre les circuits haute et basse pression d'alimentation de cette machine hydraulique.

6. Chaîne de traction selon la revendication 5, **caractérisée en ce que** le circuit haute pression est connecté à un moteur hydraulique (28) comprenant une cylindrée variable pilotée par l'unité de contrôle (40), pour entraîner des accessoires (30).

7. Procédé de fonctionnement d'une chaîne de traction selon l'une quelconque des revendications précédentes, **caractérisé en ce qu'**en mode de fonctionnement série, il désengage le moyen de liaison (10), et pilote par une unité de contrôle (40) les cylindrés variables de la première machine hydraulique (20) utilisée en pompe, et de la deuxième machine hydraulique (22) utilisée en moteur.

8. Procédé de fonctionnement d'une chaîne de traction selon l'une quelconque des revendications 1 à 6, **caractérisé en ce qu'**en mode de fonctionnement parallèle, il engage le moyen de liaison (10), et pilote par une unité de contrôle (40) les cylindrés variables des machines hydrauliques (20, 22).

9. Procédé de fonctionnement d'une chaîne de traction selon la revendication 8, **caractérisé en ce qu'**il utilise simultanément les deux machines hydrauliques (20, 22) pour délivrer soit un couple de traction important, soit un effort de freinage important sur les roues motrices (8).

10. Véhicule hybride disposant d'une chaîne de traction (1) comportant deux machines hydrauliques (20, 22) comprenant des cylindrées variables, connectées toutes les deux à un accumulateur hydraulique (24) de stockage d'énergie, **caractérisé en ce que** cette chaîne de traction (1) est réalisée selon l'une quelconque des revendications 1 à 6.

## Patentansprüche

1. Antriebssystem für Hybridfahrzeug, das zwei hydraulische Maschinen (20, 22) umfasst, die variable Hubräume umfassen, die beide an einen hydraulischen Druckspeicher (24) angeschlossen sind, der eine Energie speichert, wobei eine erste hydraulische Maschine (20) dauerhaft mit einer Brennkraftmaschine (2) verbunden ist, und eine zweite hydraulische Maschine (22) auch dauerhaft mit Antriebsrädern (8) des Fahrzeugs verbunden ist, **dadurch gekennzeichnet, dass** es außerdem eine Antriebswelle (4) umfasst, die ein Verbindungsmittel (10) umfasst, das eingerückt oder ausgerückt werden kann und sich von der Welle (4) an einem stromaufwärtigen Teil trennen kann, der dauerhaft mit der Brennkraftmaschine (2) verbunden ist, und einem stromabwärtigen Teil, der auch dauerhaft mit den Antriebsrädern (8) verbunden ist, wobei der stromaufwärtige Teil der Welle (4) die erste hydraulische Maschine (20) ständig antreibt, und der stromabwärtige Teil auch ständig die zweite hydraulische Maschine (22) antreibt.

2. Antriebssystem nach Anspruch 1, **dadurch gekennzeichnet, dass** der stromaufwärtige und der stromabwärtige Teil der Welle (4) von dem Verbindungsmittel (10) eingerückt werden können.

3. Antriebssystem nach Anspruch 1 oder 2, **dadurch gekennzeichnet, dass** das Verbindungsmittel (10) eine Einrückvorrichtung, wie eine Kuppelmuffenklaue oder eine Kupplung, umfasst, die von dem gesteuerten Aktuator (12), der von einer Steuereinheit (40) gesteuert wird, betätigt wird.

4. Antriebssystem nach Anspruch 3, **dadurch gekennzeichnet, dass** die Steuereinheit (40) variable Hubräume der hydraulischen Maschinen (20, 22) sowie die Brennkraftmaschine (2) steuert.

5. Antriebssystem nach Anspruch 4, **dadurch gekennzeichnet, dass** die Steuereinheit (40) den Hubraum jeder hydraulischen Maschine (20, 22), die als Motor oder als Pumpe verwendet wird, in Abhängigkeit von dem Moment, das auf ihrer Welle gewünscht wird, und von dem Druckunterschied zwischen dem Hochdruck- und dem Niederdruck-Versorgungskreislauf dieser hydraulischen Maschine, anpasst.

6. Antriebssystem nach Anspruch 5, **dadurch gekennzeichnet, dass** der Hochdruckkreislauf an einen hydraulischen Motor (28) angeschlossen ist, der einen variablen Hubraum umfasst, der von der Steuereinheit (40) gesteuert wird, um Zubehörteile (30) anzutreiben.

7. Betriebsverfahren eines Antriebssystems nach einem der vorhergehenden Ansprüche, **dadurch gekennzeichnet, dass** es im Serienbetriebsmodus das Verbindungsmittel (10) ausrückt und durch eine Steuereinheit (40) die variablen Hubräume der ersten hydraulischen Maschine (20), die als Pumpe verwendet wird, und der zweiten hydraulischen Maschine (22), die als Motor verwendet wird, steuert.

8. Betriebsverfahren eines Antriebsstrangs nach einem der Ansprüche 1 bis 6, **dadurch gekennzeichnet, dass** es im parallelen Betriebsmodus das Verbindungsmittel (10) einrückt und durch eine Steuereinheit (40) die variablen Hubräume der hydraulischen Maschinen (20, 22) steuert.

9. Betriebsverfahren eines Antriebssystems nach Anspruch 8, **dadurch gekennzeichnet, dass** es gleichzeitig die zwei hydraulischen Maschinen (20, 22) steuert, um entweder ein starkes Antriebsmoment oder eine starke Bremskraft auf die Antriebsräder (8) zu liefern.

10. Hybridfahrzeug, das über ein Antriebssystem (1) verfügt, das zwei hydraulische Maschinen (20, 22) umfasst, die variable Hubräume umfassen, die beide an einen hydraulischen Speicher (24) zum Speichern von Energie angeschlossen sind, **dadurch gekennzeichnet, dass** dieses Antriebssystem (1) nach einem der Ansprüche 1 bis 6 ausgeführt ist.

## Claims

1. A power train for a hybrid vehicle, comprising two hydraulic machines (20, 22) including variable displacements, both connected to a hydraulic pressure accumulator (24) which stores energy, a first hydraulic machine (20) being permanently connected to an internal combustion traction engine (2), and a second hydraulic machine (22) being connected, also permanently, to drive wheels (8) of the vehicle, **characterized in that** it further comprises a drive shaft (4) which comprises a linking means (10) which can be engaged or disengaged and which can separate said shaft (4) into an upstream part permanently connected to the internal combustion engine (2), and a downstream part connected, also permanently, to the drive wheels (8), the upstream part of the shaft (4) driving in a permanent manner the first hydraulic machine (20), and the downstream part driving, also in a permanent manner, the second hydraulic machine (22).

2. The power train according to claim 1, **characterized in that** the upstream and downstream parts of the shaft (4) can be engaged by the linking means (10).

3. The power train according to claim 1 or 2, **characterized in that** the linking means (10) includes an engagement device such as a dog or a clutch, actuated by a driven actuator (12) commanded by a control unit (40).

4. The power train according to claim 3, **characterized in that** the control unit (40) drives the variable displacements of the hydraulic machines (20, 22), and also the internal combustion engine (2).

5. The power train according to claim 4, **characterized in that** the control unit (40) adjusts the displacement of each hydraulic machine (20, 22) used as a motor or as a pump, as function of the desired torque on its shaft, and of the pressure difference between the high and low pressure circuits supplying this hydraulic machine.

6. The power train according to claim 5, **characterized in that** the high pressure circuit is connected to a hydraulic motor (28) including a variable displacement driven by the control unit (40), to drive accessories (30) .

7. An operating method of a power train according to any one of the preceding claims, **characterized in that** in serial operating mode, it disengages the linking means (10), and drives by a control unit (40) the variable displacements of the first hydraulic machine (20) used as a pump, and of the second hydraulic machine (22) used as a motor.

8. The operating method of a power train according to any one of claims 1 to 6, **characterized in that** in parallel operating mode, it engages the linking means (10), and drives by a control unit (40) the variable displacements of the hydraulic machines (20, 22).

9. The operating method of a power train according to claim 8, **characterized in that** it uses simultaneously the two hydraulic machines (20, 22) to deliver either a high traction torque, or a high braking force on the drive wheels (8).

10. A hybrid vehicle having a power train (1) comprising two hydraulic machines (20, 22) including variable displacements, both connected to a hydraulic accumulator (24) for storage of energy, **characterized in that** this power train (1) is realized according to any one of claims 1 to 6.
